# DEMANDE DE BREVET EUROPEEN

(11) **EP 2 745 976 A1**
(43) Date de publication de la demande: **25.06.2014**
(21) Numéro de dépôt: 12290461.8
(22) Date de dépôt: 21.12.2012
(51) Int. Cl.: B23K 26/08, B23K 26/26

(54) **Dispositif de déplacement d'un arrangement de soudage de bandes métalliques**

(71) Demandeur: Siemens VAI Metals Technologies GmbH, 4031 Linz (AT)
(72) Inventeur: Thomasson, Herve, 38200 Seyssuel (FR); Robinet, Jean-Pierre, 42800 Château Neuf (FR)
(74) Mandataire: Fischer, Michael

(57) **Abrégé**

La présente invention décrit un dispositif de déplacement d'au moins un arrangement de soudage apte à souder une queue d'une première bande métallique avec une tête d'une deuxième bande métallique, ledit dispositif comprenant un support maintenant une tête de soudage sur une zone à une extrémité dudit support, le support étant déplaçable au moyen d'un translateur sur une course au dessus d'une région transversale de bande et définie en fonction d'une largeur de soudage des dites queue et tête des bandes. Le dispositif se caractérise en ce que le support maintient au moins une tête de soudage complémentaire à au moins une position intermédiaire sur le support qui, lorsque le support est déplacé de façon à ce que la tête de soudage en extrémité de support se situe à au moins une demi-largeur des bandes, la tête complémentaire est disposée en bord de largeur variable de bande, à savoir le bord de la bande à largeur minimale. Une méthode de soudage associée au dispositif selon l'invention est aussi décrite.

## Description

La présente invention concerne un dispositif de déplacement d'au moins un arrangement de soudage d'une queue d'une première bande (B1) métallique avec une tête d'une deuxième bande (B2) métallique ainsi qu'une méthode de soudage associée audit dispositif selon chacun des préambules des revendications 1 et 10.

Dans le domaine du traitement métallurgique de bandes métalliques en défilement au travers d'une ligne comprenant de modules de traitement (laminoir, planeuse, fours, décapage, galvanisation, recuit, etc.), les bandes métalliques sont idéalement introduites à partir de bobines qui sont successivement débobinées afin de les disposer séquentiellement sur ladite ligne. Afin de pouvoir obtenir un défilement physique de bandes à traiter, il est souhaitable de souder une queue d'une première bande débobinée à une tête d'une deuxième bande au moins partiellement débobinée, les dites queue et tête de bande étant ainsi amenées dans une installation de soudage, notamment appelée soudeuse, pour Durant l'opération de soudage pendant laquelle nécessairement queue et tête de bandes doivent être immobilisées entre des mors afin d'y être soudées (après un découpage), il est nécessaire de limiter au moins ou de ne pas ralentir la vitesse de défilement de la bande (soudée) au niveau de traitements en aval de la soudeuse. Aussi, des moyens d'accumulation de longueur de bande sont disposés en aval et éventuellement en amont de la soudeuse afin de permettre la continuation du ou des procédés de traitement malgré la période d'arrêt sur la soudeuse grâce à l'accumulation et/ou de dévidement de bande dans lesdits moyens d'accumulation de longueur de bande. Ces moyens d'accumulations sont ainsi à minimiser, car ils sont coûteux et volumineux. En particulier, une ligne de traitement de telles bandes doit tendre à permettre un défilement continu des bandes depuis une débobineuse en entrée de ligne vers une rebobineuse en sortie de ligne. Il est donc aussi souhaitable de minimiser chaque durée d'arrêt de bande (au moins d'une queue et/ou d'une tête) à un point de ligne telle que dans la soudeuse tout en réduisant les accumulations anti-productives en ce sens qu'elles ne sont que synonymes de coûts correspondant à une réduction de la productivité de ligne par une réduction de la vitesse moyenne de défilement de bande dans la ligne de traitement et une augmentation des équipements ralentisseurs de bande tels que au moins les moyens d'accumulation de bande.

Par ailleurs, les bandes de bobines peuvent présenter des largeurs différentes à leur arrivée dans une soudeuse, ceci étant d'autant plus vrai lorsque divers types et formats de bandes y sont introduites. Actuellement, il existe ainsi deux types de soudeuses dites légères et lourdes afin de pouvoir souder des largeurs et épaisseurs divers de bandes métalliques. En d'autres termes, pour des applications de soudage plus étendue sur chacun des domaines « léger ou lourd », il est souhaitable de pouvoir étendre les plages de soudage à des formats de largeur de bandes plus importantes voire le contraire. Toutefois, dans le cas d'une soudeuse adaptée à des bandes de faibles format, si il est voulu d'étendre le soudage à un format plus étendu (en supposant que les largeurs de bandes n'excèdent pas une largeur possible de ladite soudeuse, la durée de soudage sera augmentée au moins au pro rata de l'augmentation de longueur de soudure liée à la largeur souhaitée. Ceci amènera ainsi à un ralentissement de productivité de la ligne de traitement (en aval) et potentiellement à un accroissement de moyens d'accumulations en amont. Outre le fait que la durée anti-productive sera pénalisante, il faudra aussi prévoir des accumulateurs de capacité accrue de stockage adaptés pour des formats de bandes de largeur plus étendue. De ce fait, il est déductible que de tels moyens d'accumulation en aval (et le cas échéant en amont) seront aussi nécessairement plus lourds et encore plus coûteux qu'à l'origine pour une soudeuse qui devra être adaptée à souder des formats plus importants de bandes.

Enfin, également d'un point de vue du besoin de pouvoir souder des queue et tête de bandes à largeurs ou/et formats divers, l'état de la technique prévoit un dispositif de déplacement d'au moins un arrangement de soudage d'une queue d'une première bande métallique avec une tête d'une deuxième bande métallique. Ledit dispositif de déplacement comprend un support maintenant une tête (par exemple laser) de soudage sur une zone à une extrémité dudit support, le support étant déplaçable au moyen d'un translateur sur une course au dessus d'une région transversale de bande et définie en fonction d'une largeur de soudage des dites queue et tête des bandes. Au cours d'un déplacement du support, une soudure est ainsi réalisée le long d'au moins la plus petite largeur commune des deux bandes à souder. Outre le fait que le temps de soudage augmente proportionnellement avec une hausse de largeur à souder, le support doit aussi être dimensionné et conçu de façon à assurer un positionnement très précis, en phase de soudage, par rapport à la ligne de contact de tête et queue de bandes. En particulier pour une course de soudage le long de largeurs de bandes à grand format, le support doit donc avoir des propriétés de stabilité mécanique et géométrique très hautes qui le rendent soit plus lourd, et de toute façon plus coûteux.

Un but de la présente invention est de proposer un dispositif de déplacement d'au moins un arrangement de soudage rapide et apte à souder une queue d'une première bande métallique avec une tête d'une deuxième bande métallique, en particulier dans le cas où les distances de soudage comme les largeurs de queue et tête à souder présentent des écarts significatifs spécifiquement dans le cas des plus fortes largeurs où la durée d'un cycle de soudage est augmentée inévitablement et induit les inconvénients précédemment développés.

A cet effet, il est requis de proposer de généralement diminuer un besoin en moyen d'accumulations de produits à souder telles que les bandes, afin de ne pas ralentir leur défilement, particulièrement en aval d'une soudeuse et donc a fortiori aussi en aval et si besoin en amont.

Il est enfin souhaitable que pour un dispositif de déplacement comprenant un support maintenant une tête de soudage, le dit support ne requiert pas de surdimensionnement ainsi que de propriétés de conception lui garantissant une plus haute précision de portage et guidage sur des courses variables de soudage, celles-ci pouvant varier de quelques dizaines de centimètres à plusieurs mètres.

En association avec un tel dispositif de déplacement, il se doit d'être finalement proposé une méthode de soudage optimisé en termes de durée minimale d'immobilisation de bandes dans une soudeuse, c'est-à-dire en prenant aussi en compte une étape de découpe des queue et tête de bandes préalablement à l'étape dudit soudage, ladite étape de découpe pouvant être également optimisée, en particulier au moyen du dispositif de déplacement.

Un tel dispositif de déplacement ainsi qu'une méthode de soudage associée sont ainsi présentés au travers des caractéristiques des revendications 1 et 10.

Un ensemble de sous-revendications présente également des avantages de l'invention.

Principalement, à partir d'un dispositif de déplacement d'au moins un arrangement de soudage apte à souder une queue d'une première bande métallique avec une tête d'une deuxième bande métallique, ledit dispositif comprenant un support maintenant une tête de soudage sur une zone à une extrémité dudit support, le support étant déplaçable au moyen d'un translateur sur une course au dessus d'une région transversale de bande et définie en fonction d'une largeur de soudage des dites queue et tête des bandes, l'invention prévoit que: le support maintient au moins une tête de soudage complémentaire à au moins une position intermédiaire sur le support qui, lorsque le support est déplacé de façon à ce que la tête de soudage en extrémité de support se situe à au moins une demi-largeur des bandes, la tête complémentaire est disposée en bord de largeur variable de bande, à savoir le bord de la bande à largeur minimale.

Par ce biais, la durée d'une étape de soudage est avantageusement divisée par un facteur d'au moins deux, voire davantage si le nombre de têtes dites de type complémentaire est supérieur à deux. Enfin, chacune des courses des têtes de soudage (fixe et complémentaire) vis-à-vis des produits à souder sont également réduites par un facteur deux ou plus, ce qui permet de prévoir une conception de support de maintien des têtes plus simple, c'est-à-dire d'éviter tout surdimensionnement dudit support (voire même de profiter d'un sous-dimensionnement), ainsi que de s'affranchir de propriétés de conception du support lui garantissant une plus haute précision de portage, tout particulièrement sur des courses les plus larges.

D'autres avantages et des modes de réalisation du dispositif selon l'invention ainsi qu'une méthode de soudage sont avantageusement possibles et sont fournis à l'aide de figures décrites:
- Figure 1: Dispositif de déplacement selon l'invention en position de retrait de région de soudage,
- Figure 2: Dispositif de déplacement selon l'invention en position de début d'étape de soudage,
- Figure 3: Dispositif de déplacement selon l'invention adapté pour une pré-étape de découpe.

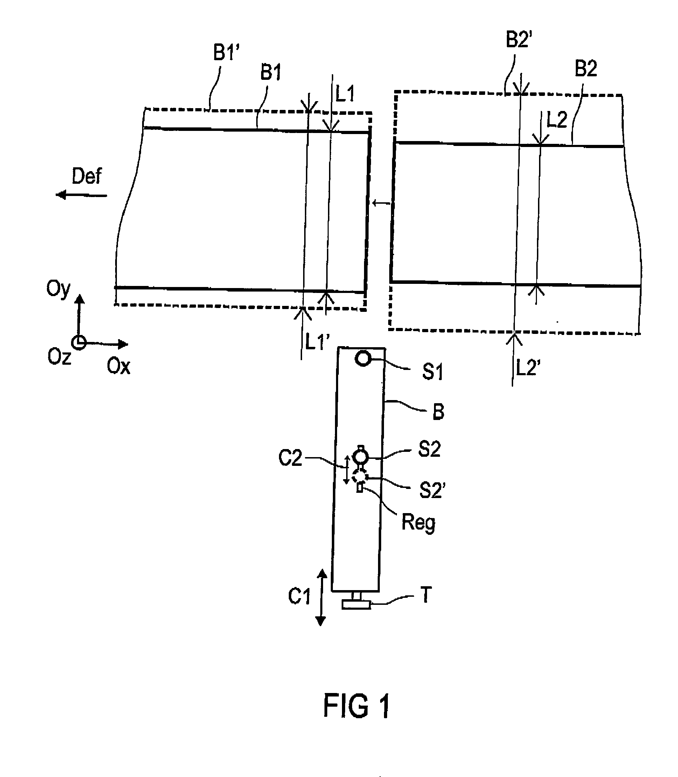

Figure 1 présente une vue de dessus d'un ensemble de bandes métalliques (B1, B2, B1', B2') de largeurs diverses et défilant selon une direction longitudinale (Def) (= direction inverse de l'axe Ox) au travers d'une soudeuse (non représentée) comprenant un dispositif de déplacement d'au moins un arrangement de soudage selon l'invention. Figure 1 présente ledit dispositif en retrait des bandes à souder, de façon à mieux le distinguer.

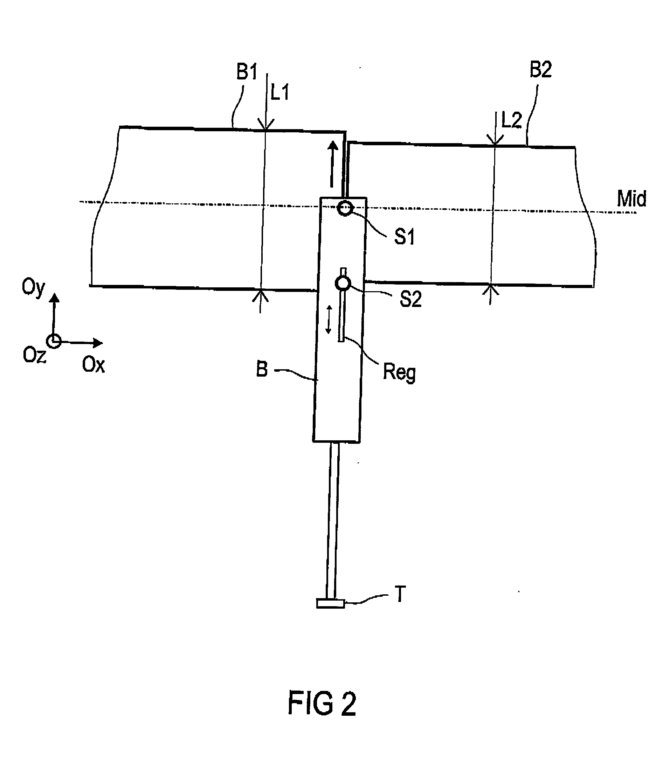

Le dispositif de déplacement de l'arrangement de soudage est ainsi apte à souder une queue d'une première bande (B1) métallique avec une tête d'une deuxième bande (B2) métallique, ledit dispositif comprenant un support (B) maintenant une tête de soudage (S1) sur une zone à une extrémité dudit support, le support étant déplaçable au moyen d'un translateur (T) sur une course (C1) au dessus d'une région transversale de bande et définie en fonction d'une largeur de soudage des dites queue et tête des bandes. Avantageusement, le support (B) maintient au moins une tête de soudage complémentaire (S2) à au moins une position intermédiaire sur le support qui, lorsque le support est déplacé de façon à ce que la tête de soudage (S1) en extrémité de support se situe à au moins une demi-largeur des bandes, la tête complémentaire (S2, S2') est disposée en bord de largeur variable de bande, à savoir le bord de la bande à largeur minimale, ici ainsi le bord de bande (B2). Cette dernière position du dispositif de déplacement selon l'invention en position de début d'étape de soudage est représentée en **figure 2****.**

En figure 1, plusieurs couples (B1, B2 ; B1', B2') de bandes sont représentés afin d'illustrer le fait que les bandes à souder peuvent présenter des largeurs différentes (L1, L2 ; L1', L2') correspondant auxdits couples de bandes. En outre, la tête de soudage complémentaire présente une position de réglage (Reg) sur une course (C2) du support (B) entre ses deux extrémités (= course C2 est parallèle à l'axe Oy) et de longueur inférieure à une demi-longueur de support, idéalement le dit réglage étant régi automatiquement par connaissance voire reconnaissance de la largeur des bandes. De ce fait, la tête de soudage complémentaire (S2) est réglable sur une position variable intermédiaire (S2, S2') du support (B) selon ladite course transversale (C2). D'autres positionnements sont aussi possibles comme en fonction de l'axe vertical Oz, mais ne seront pas abordés dans le cadre de la présente invention.

Il est possible de prévoir le dispositif de déplacement selon l'invention avec une pluralité de plus de deux têtes (par exemple une tête de type fixe S1, une tête intermédiaire et la tête de type complémentaire S2), la tête de soudage complémentaire (S2) étant par définition la plus éloignée de la tête de soudage (S1). Dans le cas d'un support maintenant trois têtes, la tête intermédiaire située entre la tête (S1) fixe au support et la tête complémentaire (S2), est ainsi soit fixe, mais de préférence réglable en positionnement pour assurer un balayage partiel de soudage complémentaire à ladite tête complémentaire (S2). Le dispositif de déplacement selon l'invention est donc analogiquement extensible à un arrangement comprenant une pluralité N de têtes de soudage, sachant que, par déplacement du support pour initier un départ d'une étape de soudage, la tête de soudage fixe est disposée à un segment de largeur L/N d'un premier bord d'une bande ayant une largeur L la plus étroite et la dernière tête dite complémentaire est située en bout de l'autre second bord de la bande la plus étroite. Les autres N-2 têtes de soudages sont disposées périodiquement de façon équidistante (sous une interdistance de L/N) entre les deux têtes dites fixes et complémentaires étant disposées chacune au plus proche de chacun des deux bords de bande. De cette façon, il est possible de souder simultanément une pluralité de N segments compris sur la largeur de bande la plus étroite. Comparativement à un arrangement à une tête unique de soudage, la durée de soudage est donc avantageusement accélérée d'un facteur N.

Ladite position intermédiaire de ou des têtes de soudage complémentaire (S2, S2') sur le support (B), au début d'une étape de soudage de nouvelles bandes, est aussi très rapidement réglable selon la direction transversale (Oy) et en fonction de la largeur variable (L1, L1' ; L2, L2') d'au moins la bande de largeur minimale, le réglage de position pouvant se réaliser en particulier de manière manuelle mais aussi de manière autonome, idéalement motorisée tel qu'à l'aide d'un automatisme.

Le réglage de positionnement du support (B) maintenant la tête de soudage fixe (S1) ainsi que le réglage du positionnement de la tête de soudage complémentaire (S2) sont illustrés en figure 2 pour laquelle la queue de première bande (B1) de largeur (L1) et la tête de deuxième bande (B2) de largeur (L2) inférieure à la largeur (B1) sont amenées (après une étape de découpe) l'une contre l'autre afin de permettre un soudage le long de la tête de deuxième bande de largeur (L2) (largeur minimale). A cet effet, le dispositif de déplacement selon l'invention actionne le translateur (T) pour déplacer le support (B) maintenant la tête de soudage (S1) sur une zone à une extrémité dudit support. Le support est ainsi déplacé sur une course au dessus d'une région transversale de bande et définie en fonction d'une largeur de soudage des dites queue et tête des bandes, en ce que la tête de soudage (S1) est amenée à une moitié de largeur de la tête de la deuxième bande (B2). Parallèlement, la tête de soudage complémentaire (S2) est aussi déplacée à au moins une position intermédiaire sur le support (B) qui, lorsque le support est déplacé de façon à ce que la tête de soudage (S1) en extrémité de support se situe à au moins la demi-largeur des bandes, la tête complémentaire (S2) est disposée en bord de largeur de la deuxième bande (B2), ou à savoir le bord de la bande à largeur minimale. Une fois ces déplacements échus, le translateur T est à nouveau activé afin de mouvoir le support et donc les deux têtes de soudage (S1, S2) en mode actif de soudage au-dessus de leur zone respective de soudage, à savoir chacune des demi-largeurs de la deuxième bande (B2) ou de la bande à largeur minimale.

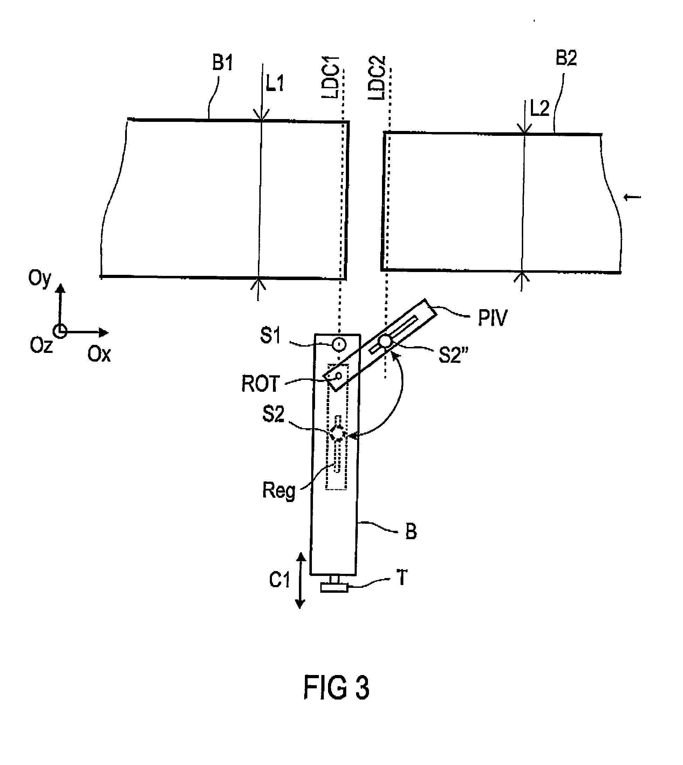

**Figure 3** présente un exemple de dispositif de déplacement selon l'invention adapté pour une pré-étape de découpe d'une queue et d'une tête de bandes (B1, B2) sur des dites lignes de découpe (LDC1, LDC2), c'est-à-dire une étape de découpe précédent l'étape de soudage telle que réalisée au moyen du dispositif de déplacement présenté aux figures 1 et 2.

Plus généralement présenté mais analogue au mode de réalisation selon figure 3, il est possible que le support (B) comprenne au moins un jeu de deux têtes de découpe alignées selon la direction Ox et espacées d'une distance égale à l'écart des lignes de découpe (LDC1, LDC2). Ainsi, en activant le translateur (T) selon une passe des têtes de découpe sur les largeurs complètes des bandes (B1, B2), il est possible de découper les queues et têtes de bandes afin de garantir aucun défaut de bord pouvant porter préjudice à l'étape ultérieure de soudage. Ainsi, le dispositif de déplacement selon l'invention permet donc de réaliser en deux passes successives une étape de découpe des deux bandes (B1, B2) (par deux têtes de découpe sous une première passe) puis une étape de soudage (par les deux têtes de soudage S1, S2 sous une deuxième passe).

Il existe toutefois des modes de réalisation dudit dispositif selon l'invention qui présentent des aspects encore plus avantageux. Il est par exemple aujourd'hui possible que les têtes de soudage présentent outre un mode de soudage, un mode alternatif de découpe de bande, idéalement par voie laser. De cette façon, si la tête de soudage (S1) (fixe à l'extrémité du support) présente un tel mode alternatif, il est donc uniquement nécessaire d'ajouter au support un socle de maintien d'une seule autre tête de découpe selon la direction Ox et espacée de la distance séparant les lignes de découpes (LDC1, LDC2).

Enfin, pour revenir à la figure 3, il est présenté un mode de réalisation du dispositif pour lequel :
- la tête de soudage (S1) étant activable en mode de découpage à un point fixe en extrémité du support (B) est alignée au droit d'une première ligne de découpe (LDC1) en queue de première bande,
- la tête de soudage complémentaire (S2) étant activable en mode de découpage est mobile au moyen d'un sous-module de déplacement par rapport au support (B) jusqu'à une position verrouillée de découpe (S2"), tel qu'au moyen d'un bras pivotant (PIV) solidaire du support (B) en un point de rotation (ROT), afin de disposer la tête de soudage complémentaire (S2) en position verrouillée de découpe (S2") sous alignement au droit d'une deuxième ligne de découpe (LDC2) de la tête de la deuxième bande, ladite deuxième ligne de découpe (LDC2) étant distincte et parallèle à la première ligne de découpe (LDC1).

Ce mode de réalisation est très avantageux, car il ne nécessite pas d'ajout de têtes distinctes de découpe sur le support (B) en supplément des têtes de soudage (S1, S2), celles-ci étant activables en mode de découpe.

Dans le cas de la figure 3, le sous -module de déplacement de la tête complémentaire (S2) vers la ligne de découpe (LDC2) est un bras pivotant, mais un homme du métier pourrait bien entendu envisager toute autre forme de sous-module.

Entre l'étape de découpe et l'étape de soudage, il est aussi possible de régler la position de la tête complémentaire (S2) au moyen de la course de réglage (Reg) disposée sous le sous-module de déplacement afin de pouvoir aligner la position de tête de découpe (S2") sur la ligne de découpe (LDC2).

La découpe se fait ensuite simultanément sur tête et queue de bandes en une seule passe de coupe de chacune des têtes de découpe respectivement sur une des lignes de découpe (LDC1, LDC2).

Enfin, le dispositif selon l'invention peut prévoir que les têtes de soudage sont simplement complémentées par au moins deux têtes de découpe de queue et tête de bandes voire commutables sous un mode de découpe de queue et tête de bandes, les têtes de découpes étant elles-mêmes couplées au support de sorte que, par déplacement du support en un mode de découpe, chaque tête de découpe couvre au moins une largeur des bandes, à savoir la largeur maximale des bandes.

Egalement, le dispositif selon l'invention prévoit préférentiellement que les têtes de soudage et/ou de découpe comprennent une sortie laser apte au soudage de bandes métalliques, ladite sortie étant en particulier couplée à un guide d'onde soit à fibre optique (laser dit « asolide ») soit aérien permettant un couplage du guide vers la sortie laser en déplacement synchrone avec le support lorsque le translateur (T), le sous-module (PIV) et/ou le réglage (Reg) sont activés. Par ce biais, une alimentation laser de toutes les têtes reste flexible même si les composantes du dispositif de déplacement selon l'invention sont mis en mouvement jusqu'à des positions de verrouillage.

Le dispositif selon l'invention peut aussi prévoir que les têtes de soudage et/ou de découpe sont couplées à leur entrée à au moins une source laser, via démultiplication de guides d'ondes soit à fibre optique (laser dit « asolide ») soit aérien. En d'autres termes, sous condition de puissance minimale requise pour une découpe ou un soudage, il est possible de minimiser le nombre de sources laser à disposer.

Finalement et selon au moins tous les modes de réalisation du dispositif de déplacement selon l'invention, une méthode de soudage apte à souder une queue d'une première bande métallique avec une tête de deuxième bande métallique peut ainsi aussi être proposée, en particulier de façon fort avantageuse pour les deux bandes (B1, B2) défilant (Def) en continu dans une ligne de traitement métallique comprenant une soudeuse de bandes. La première et la deuxième bande sont introduites dans une soudeuse comprenant le dispositif de déplacement selon l'invention, et le dit dispositif est activé en déplacement pendant une durée minimale associée à une réduction de moyens d'accumulation ou de dévidement de bandes, lesdits moyens étant localisés dans des accumulateurs situés en amont et/ou en aval de la soudeuse, sachant que la durée de soudage a été au moins réduite de moitié.

Il est aussi possible de diminuer encore la durée d'accumulation si la méthode de soudage prévoit que le dispositif de déplacement est couplé à des phases successives de soudage actif afin de souder sur des segments discontinus de largeur de bande. En d'autres termes, les têtes de soudage ne sont activées que sur les dits segments et inactivées entre les segments. Lors d'une phase d'inactivation des têtes, le dispositif de déplacement produit alors une accélération du translateur de façon à amener les têtes de soudage plus rapidement à un prochain segment à souder. Ici encore, sous réserve de tolérances de tenue mécanique par soudure discontinue, un gain en durée de soudage peut donc être obtenu.

Analogiquement aux aspects de découpe décrit précédemment, la méthode de soudage selon l'invention prévoit aussi une phase de découpe de la queue de la première bande métallique et la tête de deuxième bande métallique étant effectuée avant une phase de soudage au moyen du dispositif de déplacement selon l'invention en ce que des têtes de découpe sont disposées sur le dit dispositif (support, sous-module).

De façon optimale, la méthode de soudage selon l'invention peut inclure des phases de découpe et soudage qui se font en seulement deux passes, une aller et une retour au-dessus des largeurs de bandes. La première passe « aller » de découpe se fait dans la direction +Oy au moyen des têtes de découpe telles que (S1, S2") selon figure 3, puis la deuxième passe « retour » se fait dans la direction -Oy en venant disposer la tête de soudage complémentaire (S2) au milieu de la bande (B2) de largeur minimale et disposer la tête de soudage (S2) au bord de la bande (B2) en haut de la figure 3. Cette disposition des têtes de soudage peut s'effectuer lorsque les queues et tête découpées des deux bandes (B1, B2) sont en phase d'approche pour permettre de finalement les souder. Le même cycle peut être réitérer pour toutes nouvelles bandes en défilement continu arrivant dans une soudeuse régi par la méthode selon l'invention.

## Revendications

1. Dispositif de déplacement d'au moins un arrangement de soudage apte à souder une queue d'une première bande (B1) métallique avec une tête d'une deuxième bande (B2) métallique, ledit dispositif comprenant un support (B) maintenant une tête de soudage (S1) sur une zone à une extrémité dudit support, le support étant déplaçable au moyen d'un translateur (T) sur une course (C1) au dessus d'une région transversale de bande et définie en fonction d'une largeur de soudage des dites queue et tête des bandes,
**caractérisée en ce que**
le support (B) maintient au moins une tête de soudage complémentaire (S2) à au moins une position intermédiaire sur le support qui, lorsque le support est déplacé de façon à ce que la tête de soudage (S1) en extrémité de support se situe à au moins une demi-largeur des bandes, la tête complémentaire (S2, S2') est disposée en bord de largeur variable de bande, à savoir le bord de la bande à largeur minimale.

2. Dispositif selon revendication 1, pour lequel en cas d'une pluralité de plus de deux têtes, la tête de soudage complémentaire (S2) est la plus éloignée de la tête de soudage (S1).

3. Dispositif selon revendication 1 ou 2, pour lequel la position intermédiaire de ou des têtes de soudage complémentaire (S2, S2') sur le support est réglable selon une direction (Oy) et en fonction de la largeur variable (L1, L1' ; L2, L2') d'au moins la bande de largeur minimale, le réglage de position se réalisant en particulier de manière manuelle voire autonome, idéalement motorisée.

4. Dispositif selon revendication 2, pour lequel la tête de soudage complémentaire présente une position de réglage (Reg) sur une course (C2) du support entre ses deux extrémités et de longueur inférieure à une demi-longueur de support, idéalement le dit réglage étant régi automatiquement par connaissance de la largeur des bandes.

5. Dispositif selon une des revendications précédentes, pour lequel les têtes de soudage présentent un mode alternatif de découpe de bande, idéalement par voie laser.

6. Dispositif selon revendication 5, pour lequel :
- la tête de soudage (S1) en mode de découpage fixe sur le support (B) est alignée au droit d'une première ligne de découpe (LDC1) en queue de première bande,
- la tête de soudage complémentaire (S2) en mode de découpage (S2") est mobile au moyen d'un sous-module de déplacement par rapport au support (B) jusqu'à une position verrouillée de découpe (S2"), tel qu'un bras pivotant (PIV) solidaire du support (B) en un point de rotation (ROT), afin de disposer la tête de soudage complémentaire (S2) en position verrouillée de découpe (S2") sous alignement au droit d'une deuxième ligne de découpe (LDC2) de la tête de la deuxième bande, ladite deuxième ligne de découpe (LDC2) étant distincte et parallèle à la première ligne de découpe (LDC1).

7. Dispositif selon une des revendications précédentes 1-4, pour lequel les têtes de soudage sont complémentées par au moins deux têtes de découpe de queue et tête de bandes voire commutables sous un mode de découpe de queue et tête de bandes, les têtes de découpes étant elles-mêmes couplées au support de sorte que, par déplacement du support en un mode de découpe, chaque tête de découpe couvre au moins une largeur des bandes, à savoir la largeur maximale des bandes.

8. Dispositif selon une des revendications précédentes, pour lequel les têtes de soudage et/ou de découpe comprennent une sortie laser apte au soudage de bandes métalliques, ladite sortie étant en particulier couplée à un guide d'onde soit à fibre optique soit aérien permettant un couplage du guide vers la sortie laser en déplacement synchrone avec le support.

9. Dispositif selon une des revendications précédentes, pour lequel les têtes de soudage et/ou de découpe sont couplées à leur entrée à au moins une source laser, via démultiplication de guides d'ondes soit à fibre optique soit aérien.

10. Méthode de soudage apte à souder une queue d'une première bande métallique avec une tête de deuxième bande métallique, les deux bandes défilant (Def) en continu dans une ligne de traitement métallique, pour laquelle la première et la deuxième bande sont introduites dans une soudeuse comprenant le dispositif de déplacement selon une des revendications précédentes, et où le dit dispositif est activé en déplacement pendant une durée minimale d'accumulation des bandes en amont et/ou en aval de la soudeuse.

11. Méthode de soudage selon revendication 10, pour laquelle le dispositif de déplacement est couplé à des phases successives de soudage actif afin de souder sur des segments discontinus de largeur de bande.

12. Méthode de soudage selon revendication 10 ou 11, pour laquelle une phase de découpe de la queue de la première bande métallique et la tête de deuxième bande métallique est effectuée avant une phase de soudage au moyen du dispositif de déplacement selon une des revendications 5 à 9 en ce que des têtes de découpe sont disposées sur le dit dispositif.

13. Méthode de soudage selon une des revendications 10 à 12, pour laquelle les phases de découpe et soudage se font en deux passes, une aller et une retour au-dessus des largeurs de bandes.
